(19) Europäisches Patentamt

European Patent Office

Office européen des brevets

(11) **EP 1 070 398 B1**

(12) **EUROPEAN PATENT SPECIFICATION**

(45) Date of publication and mention
of the grant of the patent:
**06.10.2004 Bulletin 2004/41**

(51) Int Cl.⁷: **H04H 1/00**, H04H 9/00,
H04N 7/173

(21) Application number: **99924808.1**

(22) Date of filing: **09.04.1999**

(86) International application number:
**PCT/EP1999/002424**

(87) International publication number:
**WO 1999/053636 (21.10.1999 Gazette 1999/42)**

(54) **BIDIRECTIONAL BROADCASTING SYSTEM**

BIDIREKTIONALES RUNDFUNKSYSTEM

SYSTEME DE RADIODIFFUSION BIDIRECTIONNEL

(84) Designated Contracting States:
**AT BE CH DE FR GB IE LI LU NL SE**

(30) Priority: **09.04.1998 EP 98106597**

(43) Date of publication of application:
**24.01.2001 Bulletin 2001/04**

(73) Proprietor: **BetaResearch Gesellschaft für
Entwicklung und Vermarktung digitaler
Infrastrukturen mbH
85774 Unterföhring (DE)**

(72) Inventors:
 • **HEICHLER, Johannes, BetaResearch Ges. Entw.
 Betastrasse 1 85774 Unterföhring (DE)**
 • **GILLIES, David, BetaResearch Ges. Entw.
 Betastrasse 1, 85774 Unterföhring (DE)**
 • **HENSELMANN-WEISS, Wolfgang,
 BetaResearch Ges. E.
 Betastrasse 1, 85774 Unterföhring (DE)**
 • **KEMPF, Andreas, BetaResearch Ges. Entw.
 Betastrasse 1, 857 74 Unterföhring (DE)**
 • **TOTH, Gabor, BetaResearch Ges. Entw.
 Betastrasse 1, 85774 Unterföhring (DE)**

(74) Representative: **Betten & Resch
Postfach 10 02 51
80076 München (DE)**

(56) References cited:
**EP-A- 0 713 347     EP-A- 0 825 775
EP-A- 0 851 618     WO-A-97/21276
WO-A-97/48191     WO-A-97/48196**

EP 1 070 398 B1

**Description**

FIELD OF THE INVENTION

The present invention relates to a system suitable for RF distribution of analogue and digital television signals as well as forward (here called: downstream) interaction channels.

Technical means for generating a return channel from the user's premises are provided to perform the (here called: upstream) interaction from the user.

Additional means to guarantee a certain quality of the user radiated signal are provided in the system.

Systems like these are often called "LMDS" (Local Multipoint Distribution System) and can be used for re-broadcasting programmes from satellite or cable as well as providing a service for interaction within or besides the broadcasting scenario. The channel bandwidth is flexible for each direction.

BACKGROUND OF THE INVENTION

LMDS comprises systems for distribution of video and audio signals by microwave links in small-area coverage regions. Thus, LMDS often is called "wireless cable" incorporating the distribution of signals from a base station within a cell composed of a defined number of users with set top boxes as terminals. E.g. the carrier frequency range from 40.5 ... 42.5 GHz is a possible operation range for this service.

As a state-of-the-art, analogue (FM modulated) systems for video and audio distribution are beginning to become available on the market. With certain modifications an application for digital carriers (quarternary phase shift keying QPSK modulation) is possible. Return channels for interactions so far are not yet implemented.

The RF distribution is generally performed by using horn antennas with a gain of approximately 15 dBi at the base station site and 35 dBi at the user terminal site. The coverage of the system often is indicated with a radius ranging from 1 ... 5 Km depending on weather conditions (rain attenuation). A basic problem is revealed by the fact that the user terminal has to radiate a return channel signal with sufficient stability and broadcasting quality in the 40 GHz range which is not yet technically solved in terms of a reliable and mass-market suitable solution.

WO-A-97/48191 discloses a user-side reception system for receiving TV signals having means for receiving downstream signals from a base station and means for generating upstream signals using a high-precision signal. The system disclosed therein uses pilot tones for feedback into the automatic gain control of the receiver as well as for the provision of a reference frequency at the receiver. The local oscillator is locked to the transmission system oscillator to provide a stable local oscillator frequency.

WO-A-97/21276 discloses a local multipoint distribution system where also a stable downstream signal is tracked with a phase-lock loop, and all signals are synchronized to it. Thereby the signals initiated from the subscriber can be kept at a low error level.

SUMMARY OF THE INVENTION

It is an object of the invention to provide the systematical and technical solution of an LMDS system for the operation in the 40 GHz frequency ressource or above which reduces the precision requirements of the local oscillator in the user site.

The invention is defined in the independent claim 1. The dependent claims define particular embodiments of the invention.

According to one embodiment of the invention there is provided a base station consisting of a transmitter system composed of a radiation and reception antenna as a combined or separate devices, a power amplification stage, an upconversion stage as well as a multicarrier modulation equipment for yielding one or more carriers for broadcasting or interaction activity with variable symbol rates and signal bandwidths. The base station also consists of reception paths comprising low noise receivers connected to the antenna, down converters to present the received spectrum within a defined IF range as well as analyser - demodulator stages to exploit the carriers received. Additional links of the base station to other telecommunication networks as e. g. satellite segments are provided. In this case suitable interfaces to the said networks are to be defined, which can be done in a well-known manner.

According to an aspect of the invention there is provided a highly stable frequency reference ("beacon") to be radiated together with the other carriers at a well-defined location in the spectrum with the purpose to offer a return channel transmission reference frequency for the user terminals.

According to an embodiment of the invention there is provided a user terminal at the user's site to receive the said signals radiated by the base station and to process them in a suitable manner for enabling broadcasting reception and mutual interaction between the base station and the user.

According to a further embodiment of the invention data signalling between the base station and the user terminals as well as vice-versa is provided. Details of signalling as e.g. the data format, the protocols etc. may be a subject to change depending on special solution.

In an embodiment of the invention to be described in detail hereinafter the LMDS system structure comprises a base station with a partitioning of the frequency ressource as well as a user terminal.

In another embodiment of the invention to be described in detail hereinafter the technical means for receiving the beacon as well as the downstream carriers comprises a low noise amplifier in combination with a block down converter. Suitable filters to reject image frequencies are also applied.

In a further embodiment of the invention to be described in detail hereinafter the technical means for exploiting the highly stable reference frequency comprises oscillators, synthesizers and mixers as well as suitable filters.

In a further embodiment of the invention to be described in detail hereinafter the technical means for radiating the upstream carrier from the user terminal comprises a suitable modulator, a sufficient stable local oscillator and a suitable upconverter. Suitable filters to reject image frequencies are also applied.

In a further embodiment of the invention to be described in detail hereafter the technical means for exploiting the user radiated upstream carriers at the base station's site comprises FFT (Fast Fourier Transform) circuits or MCD (Multi Carrier Demodulator) as well as a stack of single carrier demodulator circuits.

In a further embodiment of the invention to be described in detail hereafter the technical means and structures for enabling single user as well as SMATV featured operation at the user terminal's site comprises DiSEqC™ (Digital Satellite Equipment Control) or analogue switching criteria compatible switches as well as conventional in-house cabeling equipment.

BRIEF DESCRIPTION OF THE DRAWINGS

The invention will hereinafter be described with reference to the accompanying drawings, in which:

FIG. 1 shows the structure of one so-called LMDS cell;
FIG. 2 depicts the repeated array of a plenty of said cells;
FIG. 3 expresses an example of the spectrum yielded by the base station as well as the user terminal;
FIG. 4a shows the downstream generation by block conversion of completely backhauled carrier combs;
FIG. 4b describes the downstream generation by power combination of single modulator signals;
FIG. 5 describes a compact solution for the processing of the downstream carriers, the beacon and the upstream carrier(s) ;
FIG. 6 describes the application of FIG. 5 as a component to be used for construction of a universal outdoor unit for in-house distribution;
FIG. 7 demonstrates the reception of the upstreams with a stack of single demodulators;
FIG. 8 demonstrates the same reception with a multicarrier demodulator;
FIG. 9 demonstrates the same reception using an FFT stage;
FIG. 10 describes the structure of a single user application;

FIG. 11 describes the same structure for multi user operation like SMATV;
FIG. 12 shows schematically the aerial structure composed of the elements of FIG. 6 and a waveguiding/filtering system.

DETAILED DESCRIPTION OF THE EMBODIMENTS

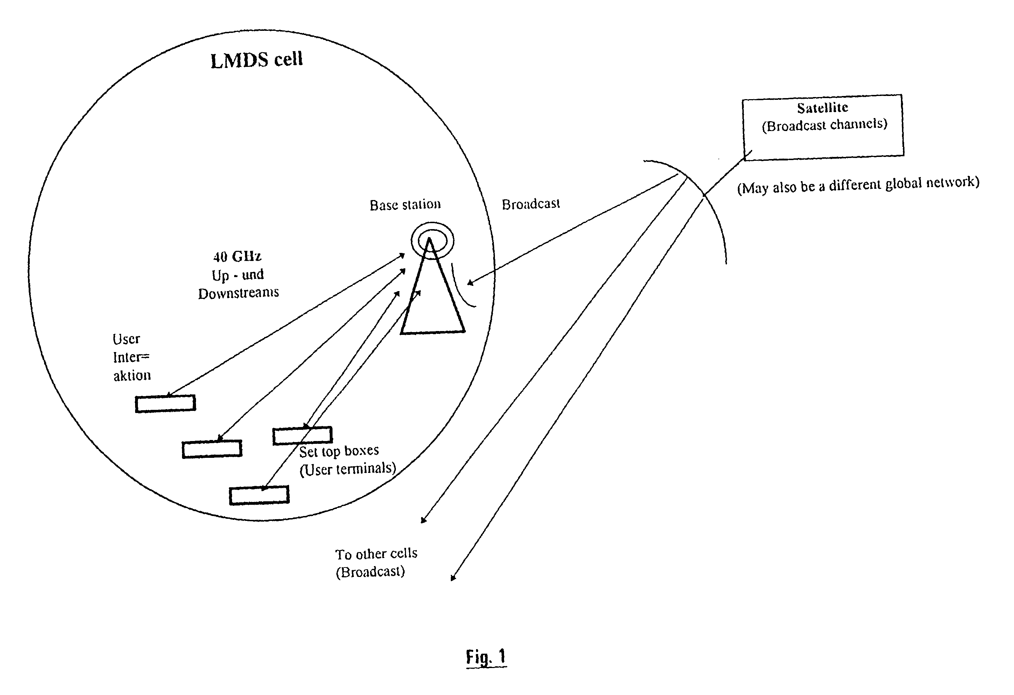

According to an embodiment of the invention, an LMDS structure (FIG.1) generally shows up as a point - to - multipoint distribution on one hand concerning the paths running from the base station to the user terminals and as a multipoint - to - point distribution on the other hand concerning the paths running from the user terminals to the base station. No signal way is switched bypassing the base station.

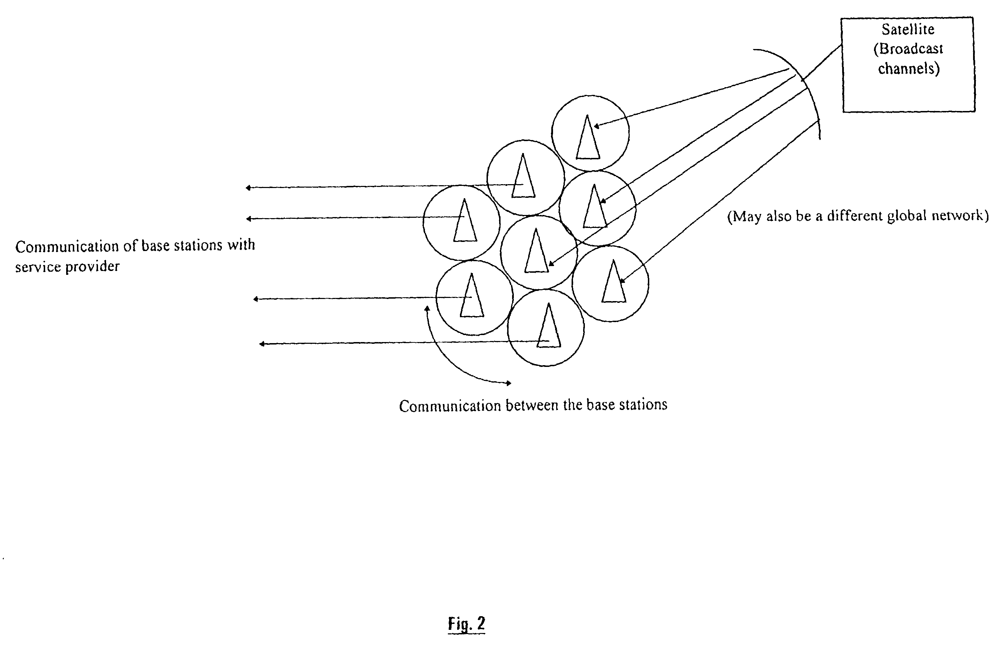

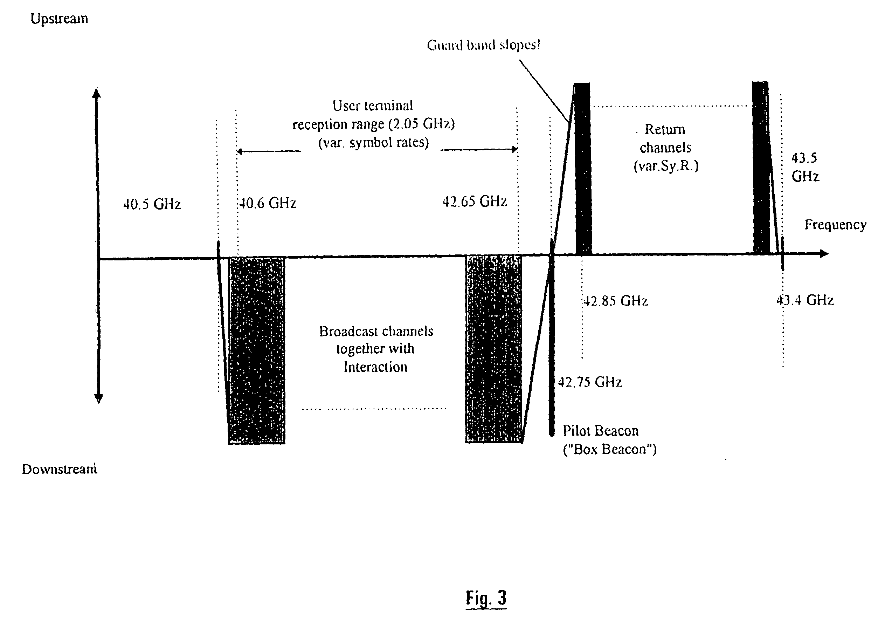

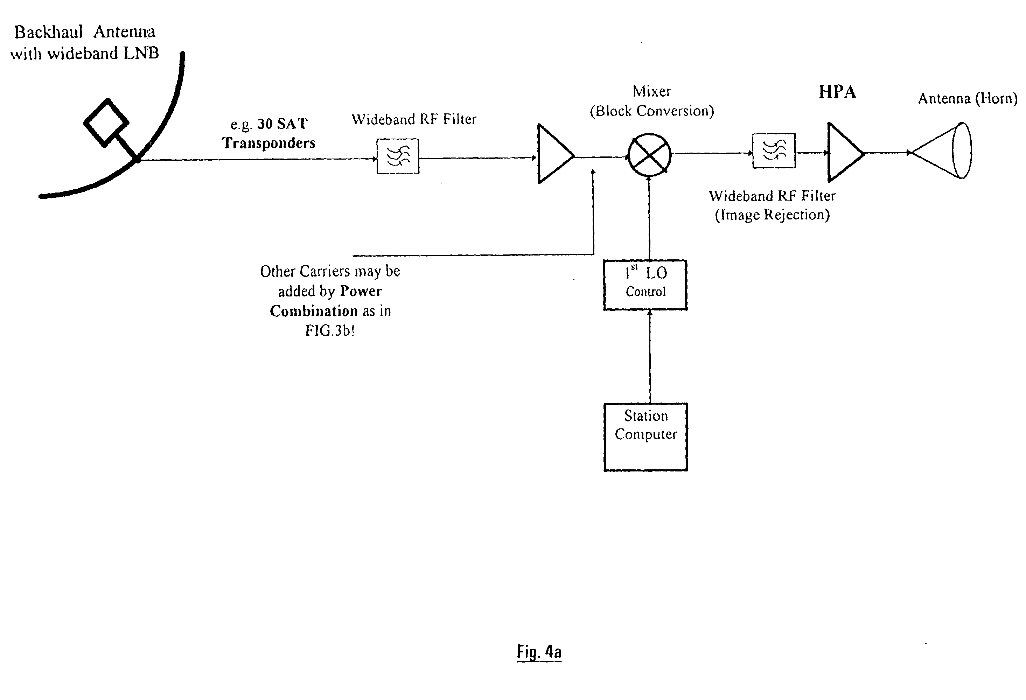

The LMDS structure repeats itself (FIG.2) in the shape of so-called cells comprising an entity of users forming a group in the sense that this group is supplied with all necessary signals by the base station. The base station itself comprises the facility to exchange signals with other networks as e.g. satellite space segments. It may consist of RF processing equipment as well as baseband processing equipment in its farthest sense. FIG.3 shows the possible spectral ressource exploited by the communication partners: It comprises for two polarizations, horizontal and vertical, the downstream carriers denoted from e.g. 40.6 ... 42.65 GHz, a beacon located at e.g. 42.75 GHz as well as the upstream carriers denoted from e.g. 42.85 ... 43.4 GHz. Suitable guard bands are inserted at the borders of each particular ressource.

The generation of the downstream RF signal is one major task of the base station.

Generally there are two possibilties to radiate downstreams in a wide band multicarrier manner:

a) Re-Broadcasting e.g. a complete satellite segment by block upconversion to 40 GHz, without remodulation. In this case, the content of the downstreams is not changed.

b) Remodulation of a selected subset of channels, e.g. from telecom's cable systems or satellite with adoption of adjacent data information like NIT (Network Information Table) and/or generation of interaction. In this case, a construction of power combination at an IF or RF level may be provided.

FIG. 4a shows the first approach: A satellite segment is received as a whole by a so-called "backhaul antenna" and firstly downconverted to the SAT IF band by a so-called wide band LNB (Low Noise Block Converter). This frequency band is then filtered and power levelled to adopt to the upconversion stage following. After another filter for image band rejection the re-broadcasting signal is power amplified by a HPA (High Power Amplifier) to supply the antenna with sufficient amplitude per channel required by the overall path link budget.

It is important to note that for this kind of multicarrier uplink sufficient power amplifier backoff must be provided to keep inter-carrier-intermodulation below certain values. Thus, the total available linear operation power of an N - carrier amplifier must be backed off by at least BO = 20 log(N), i.e. for a single carrier, no backoff is necessary, for two carriers, 6 dB backoff must be provided due to the double beat frequency amplitude etc.. This results that for large re-broadcasting scenarios HPAs with sufficient saturation power must be implemented, which can be done by using TWTs (travelling wave tubes) or wide-band high-power semiconductor amplifiers.

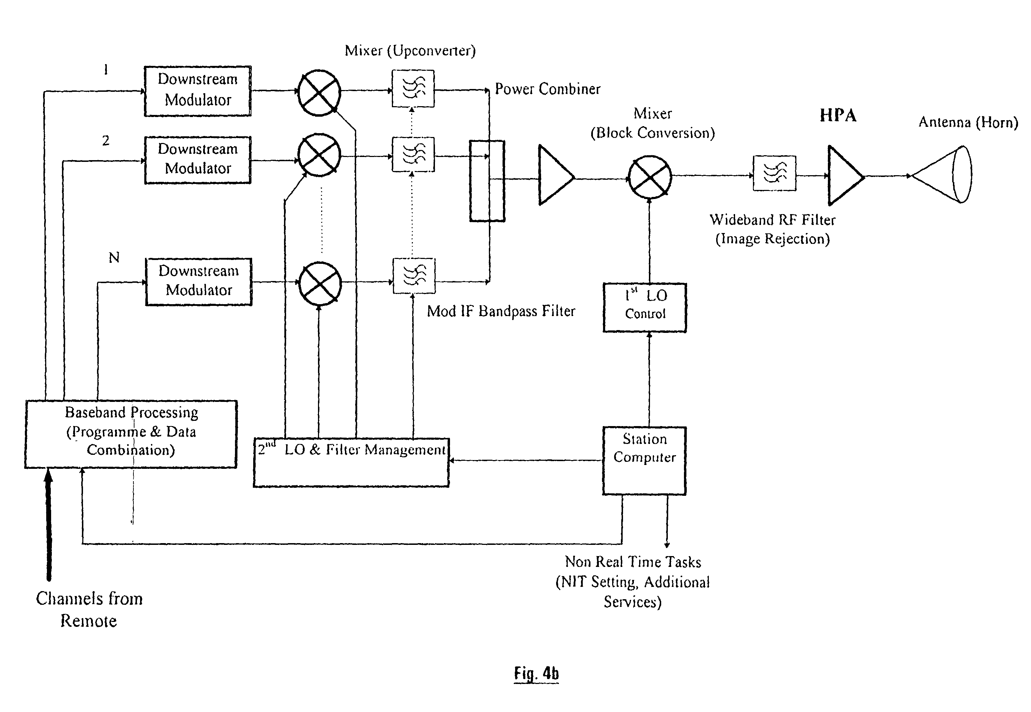

FIG. 4b shows the power combination approach for the IF or the RF level, here drawn as an example for the IF level: TV programmes as well as data may be collected from remote ("channels from remote") e.g. by reception and demodulation. In a baseband processing stage, which may be of distributed structure, the transport data streams are combined in a wanted manner. Here, also interaction channels can be inserted. Then the resulting streams are fed into the downstream modulators providing at each output an e.g. QPSK modulated digital carrier signal. These carriers are upconverted in a first stage by a LO (local oscillator) and filter management, power combined to achieve a carrier comb of all signals as a sum and then further upconverted to RF level. This is the resulting frequency multiplex for the HPA to be radiated to the user terminals.

Of course, a combination of both solutions is possible, e.g. if re-broadcasting channels are mixed with embedded or non-embedded interaction downstreams.

Another solution is the combination of single carriers at the RF level by single amplifiers, filters and power combiners, as it is known from satellite uplinks, or the use of one antenna per channel, but these solutions are not described here in detail because of the lack of economy when a plenty of carriers (30 transponders per satellite segment / one polarization!) shall be radiated.

The communication between the cells as well as the communication with a remote service provider may be realized by using conventional foreign networks (telecom's networks) or alternatively special networks tailored for this purpose.

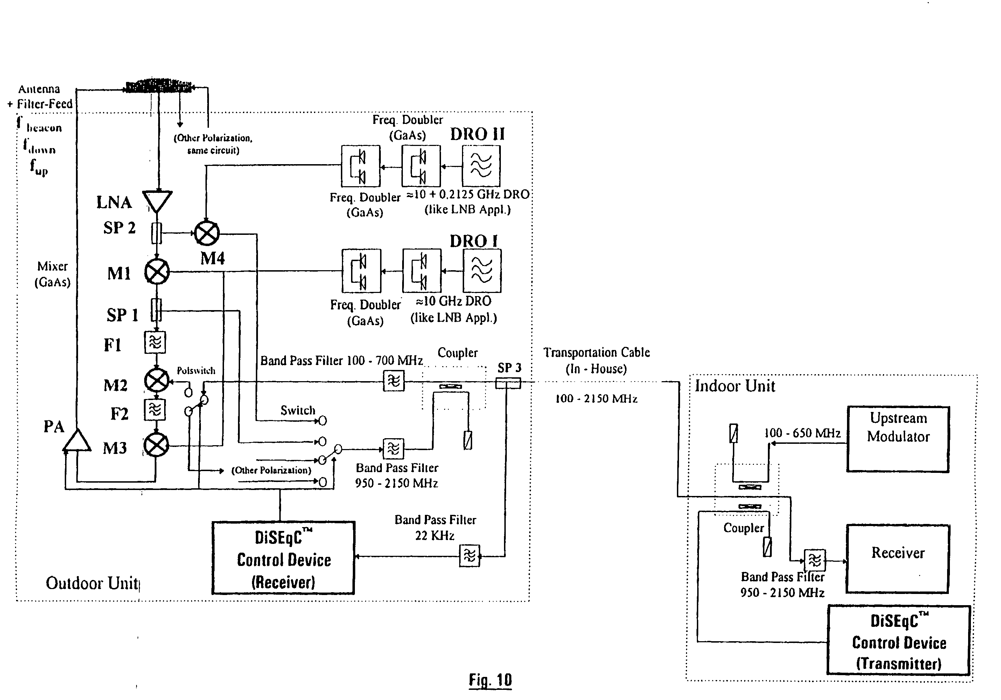

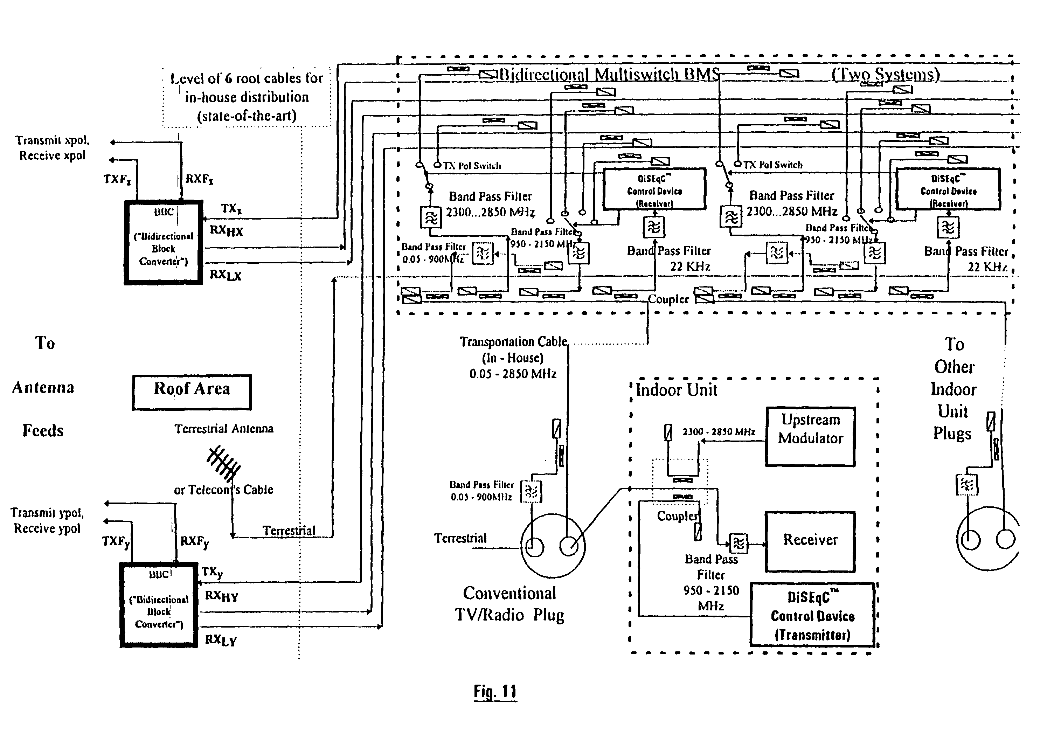

The so-called user terminal mainly consists of two blocks (see also FIG.10): An outdoor unit and an indoor unit. In case of a house distribution (see also FIG. 11) of LMDS IF signals, the user terminal embodies each path being rooted from the building roof (outdoor) via cables, switches etc. through the building to the set top box into the user's room (indoor). The set top box comprises means for reception (selection) of an IF level downstream channel as well as means for transmission (modulation) of an IF level upstream channel. In addition to this, means for transmitting a command set (e.g. DiSEqC™) are provided for governing the outdoor unit / inhouse distribution switches.

The purpose when exploiting the highly stable radiated beacon signal is to upconvert the modulation signal of the upstream by keeping the quality of the said beacon clean carrier. In practice, the upconversion incorporates some necessary filtering to separate the wanted signals from unwanted image signals as well as from wanted signals in the spectral vicinity of the beacon. This filtering is hardly feasible at the 40 GHz level due to the limitation of slope steepness being necessary for separation. Thus, filtering must be performed at a suitable IF level.

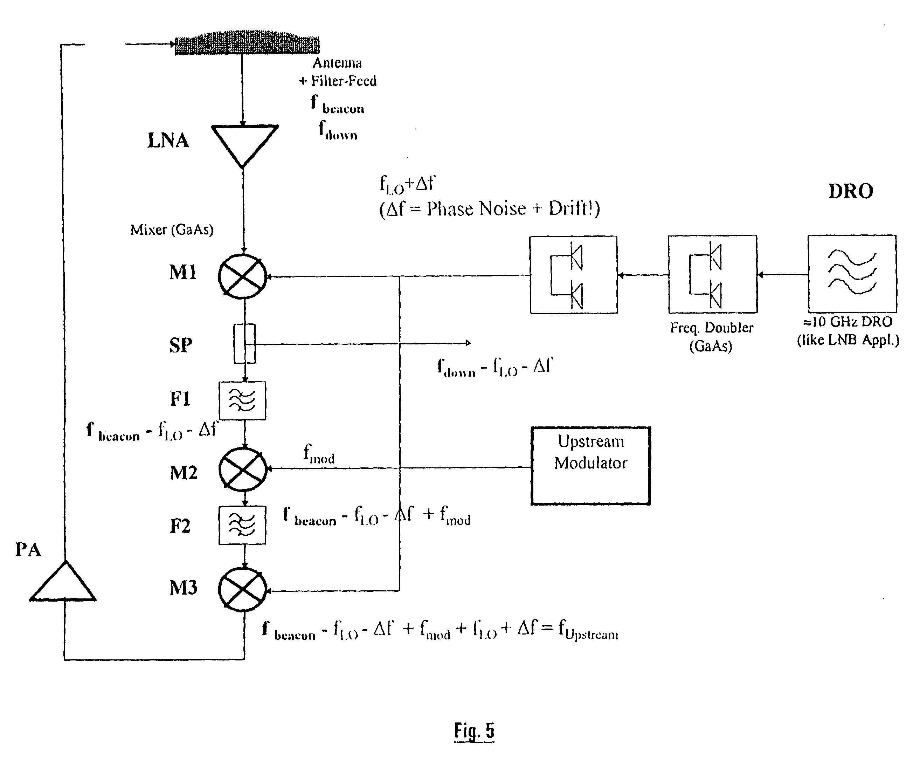

Converting the high quality beacon signal to an IF level unfortunately means involving another low - quality local oscillator in the process and therefore a degradation of the result. A way out of this problem concerns a further embodiment of the invention comprising a so-called differential mixing stage as shown in a specific embodiment in FIG. 5.

The same stage serves for downconverting the downstream carriers to a suitable IF level, and the same stage serves for upconverting the upstream carrier(s) to the wanted 40 GHz RF level.

A downconversion of the beacon signal is performed by a first mixing, the resulting signal is filtered, and a modulation then is added. The modulated signal is filtered and then upconverted, thereby the jitter of the local oscillator signal is cancelled out. Simultaneously, a downconversion of the downstream signal $f_{down}$ is performed using the first mixer also used for the beacon signal. The thereby downconverted signal is coupled out using a beam splitter. This will become more apparent from the following detailed description in connection with Fig.5.

FIG. 5 shows the technical block circuit diagram for realization: A suitable antenna consisting of e. g. a dish reflector or a lens microwave collimator is equipped with a multiport feed enabling the separated routing of transmission and reception power. Here, the two ports for one linear polarization are shown.

At the reception port, a low noise amplifier LNA is connected to enhance the reception signal power of the two signals $f_{beacon}$ and $f_{down}$. A first mixing stage M1 downconverts these signals to an IF level with the aid of a suitable oscillator DRO and two fequency doublers postconnected. This oscillator signal enters M1 with the frequency $f_{LO} + \Delta f$ where $\Delta f$ denotes phase noise and drift introduced.

As a first result, the IF level of the downstreams is achieved by a power splitter SP presenting the signals at

$$f_{down} - f_{LO} - \Delta f$$

for the user terminal IF input. The value $\Delta f$ has in

this case to cope with user terminal input phase noise and drift requirements like conventional satellite downlink LNBs feature.

Note, that the Δf magnitude occurs at this point with negative sign.

Further, a filter F1 extracts the downconverted beacon signal at the spectral level

$$f_{beacon} - f_{LO} - \Delta f$$

behind the second port of SP with sufficient bandwidth to keep the entire Δf magnitude for further processing.

In a next step, the modulation frequency $f_{mod}$ is added by a second signal multiplier M2 which results a spectral level:

$$f_{beacon} - f_{LO} - \Delta f + f_{mod}$$

and which is filtered again with sufficient bandwidth to keep the entire Δf magnitude.

A last upconversion of this signal is performed by a third mixer M3 yielding:

$$f_{beacon} - f_{LO} - \Delta f + f_{mod} + f_{LO} + \Delta f$$

$$= f_{beacon} + f_{mod}$$

with the basic result that the signal entering the transmitter power output stage PA only comprises the errors of the two components $f_{beacon}$ and $f_{mod}$. Since these errors are well - defined and small ($f_{mod}$ is a frequency within the range of 100 MHz or somewhat more and thus can be easily generated by crystal oscillator technique), the upstream signal achieves broadcasting quality with only few ppm drift and phase noise avoiding exhaustive costs.

In principle, the beacon signal operating as a reference frequency could also be generated at the user-site, e.g. at the outdoor unit or even at the set-top box as soon as such a solution becomes technically feasible in terms of the quality and the costs of the corresponding oscillators being available.

According to a further embodiment, the incoming upstreams are located at arbitrary places in the provided spectral ressource range (see FIG.3). In case of TDMA (Time Division Multiple Access) operation the suitable modulation method will be a burst modulation starting and stopping carrier radiation synchronously to a master clock or asynchronously by a base station command, in case of continuous operation, user carrier switching on and off will only be done at beginning and end of transmission by base station frequency management.

In both cases, suitable demodulation equipment serves for extracting digital data from carrier. This extraction can be generally performed by three means:

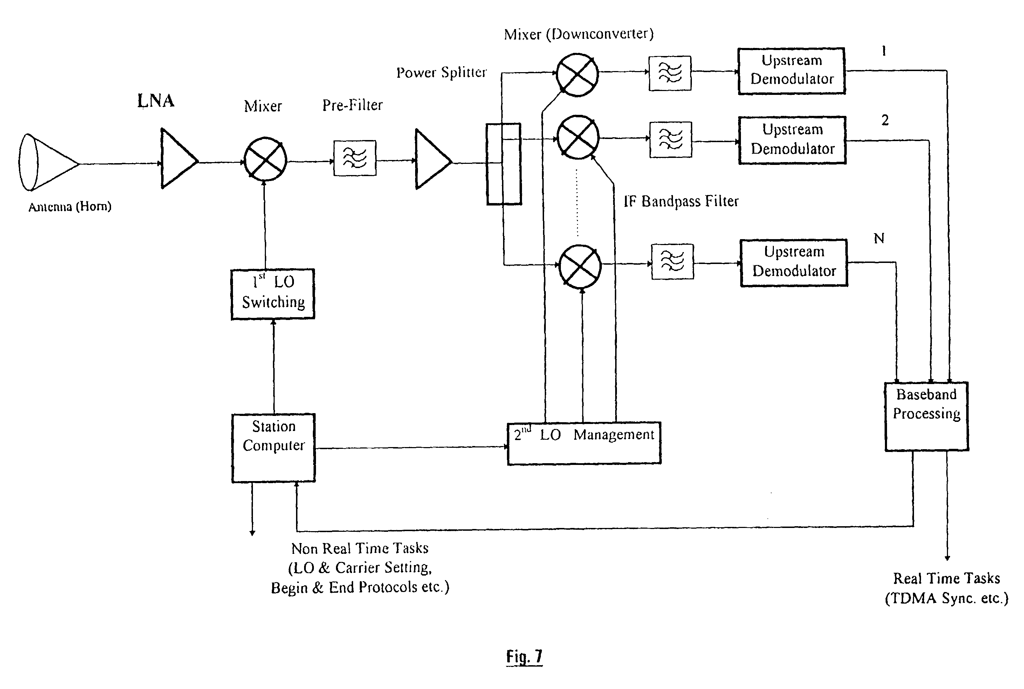

1) Separate demodulators, as many as carriers are on air, 2) so-called multicarrier demodulators (MCD) being able to demodulate N carriers by one device, 3) so-called fast fourier transformers (FFT) being capable to analyse the whole spectrum being on-air and to present the result by real and imaginary component data, which is similar to demodulation. The embodiments shown in Figures 7 to 9 respectively illustrate these three possibilities for demodulation.

FIG. 7 shows solution 1) with the separate demodulators: The incoming RF signal as a whole is in a first step received by a sufficient wide-angle antenna, then low - noise amplified and downconverted with a first LO to an IF level for better further processing. This LO might be switched in frequency for suitable range selection, if necessary. Then, the signal is pre-filtered and amplified a second time to be splitted by a power splitter and to be downconverted by an N-fold downconverter bank followed by an N-fold filter bank for the second IF level. The number N corresponds to the number of subscribers associated to one base station and therefore to one LMDS cell. The downconverter oscillator frequencies for the downconverter bank are organized by a so - called $2^{nd}$ LO management stage comprising a synthesizer stage with a computer interface. This interface accepts data from the station computer serving for the station management as a whole. The station computer is also a means for communication with other base stations or the central service provider as well as for processing the internal station data streams.

The filter bank is followed by an N-fold demodulator bank being capable to present the upstream carrier content in the baseband format for further baseband processing. This processing depends on the momentaneous LMDS return channel application and therefore is a free parameter. Among other things it comprises the separation of real-time and non real-time tasks of baseband processing.

E.g. real-time tasks are:

- Direct user interaction,
- TDMA processing (synchronization) in case this is used,
- Scrambling for conditional access.

E.g. non real-time tasks are:

- Setting of the upstream carrier frequencies and transmitting them to the individual subscribers,
- Commanding the begin and end of a user session as well as receiving wishes from user terminals for beginning and ending a session.

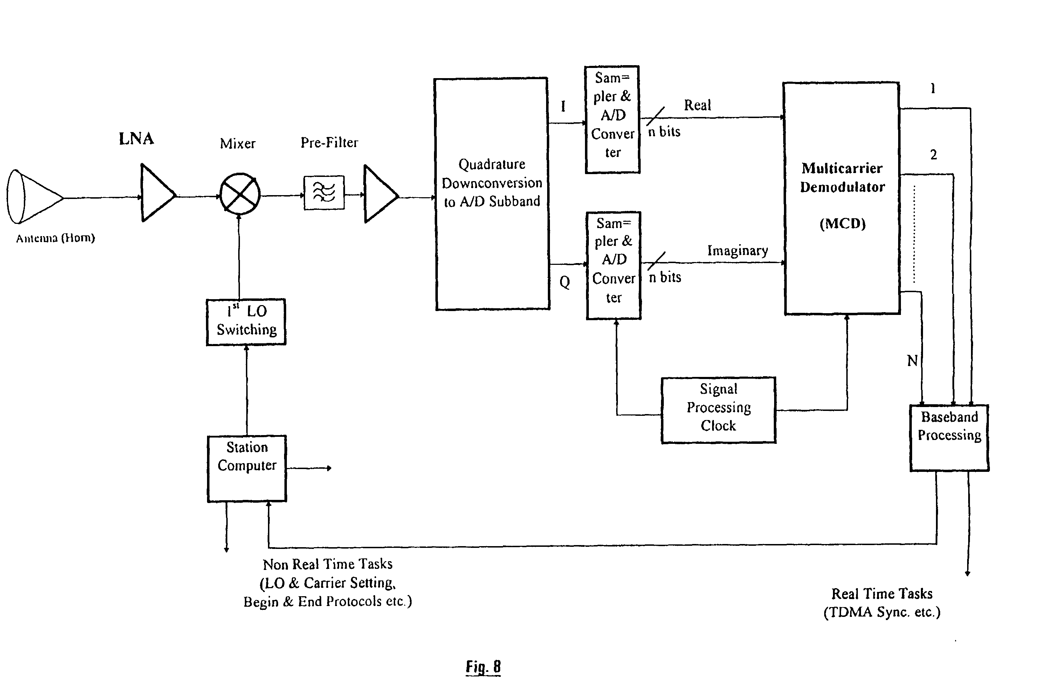

FIG. 8 shows solution 2) with the MCD circuit:

The signal reception is performed in a similar way to solution 1). The difference in this case is that the further processing is done by a quadrature downconversion stage presenting an I and Q component of the IF composite signal. Two sampling A/D - converters follow to digitize the signal being then represented as real and imaginary numbers of n bits width at the outputs. The multicarrier demodulator postconnected is a sufficient fast integrated circuit or a composition of those presenting at its N outputs, corresponding to the N subscribers, the demodulated baseband signals. The further processing is identical to solution 1).

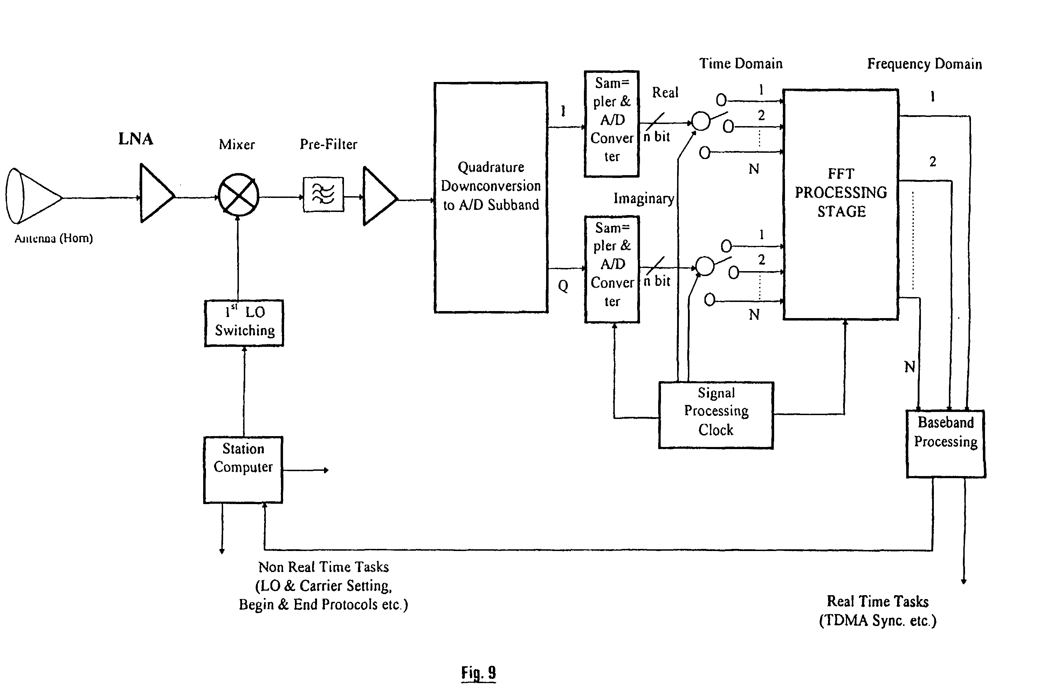

FIG. 9 at last demonstrates the FFT solution 3). The basic idea is to analyse the time - domain received signal according to the laws of fourier transform. The maximum number of subscribers must be known before implementation, i.e. the FFT stage must be tailored to a sufficient number of carriers occurring.

Generally, this FFT unit consists of so-called butterfly networks accepting at their inputs N complex time-domain samples at word length n and presenting at their outputs N complex coefficients at word - length n describing the input signal in terms of real and imaginary component at a spectral one-of-N location. This is similar to the demodulation representation of the single carrier at the respective location.

The signal is received in a similar manner to the other solutions, i.e. it is first downconverted and pre-filtered as well as amplified. Since the FFT stage needs real and imaginary samples as the MCD does, a quadrature downconversion is provided as well. The grade of the downconversion depends on the A/D converters sampling rate and thus on the technology available. Above all, Shannon's sampling law must be fulfilled describing that a signal with the maximum frequency component at f must be sampled with 2f. In practice, the quadrature downconversion will be done in a way that the lowest frequency component is near baseband. The highest frequency component of the signal must be then within the range that is technologically feasible by the hardware.

The two rotational switches postconnected to the A/D converters denote the periodic sampling process feeding the sampled signal data into the FTT processing stage with a speed being at least 1/T = 2f when T is the period between two switch positions and f is the maximum frequency component of the sampled signal.

The further processing of the outgoing N complex demodulation products is identical to the other solutions.

The applicability of the MCD and FFT solution depend on the technology available since a large number of upstream carriers corresponds to a large processing bandwidth and thus, speed, which only can previously be presented by advanced ASIC technology. However, if these approaches are feasible for a specific solution, the single demodulator stack solution with its enhanced amount of hardware equipment can be circumvented.

Generally, LMDS is planned to be a system joining one user terminal (set top box) with one outdoor antenna unit. Nevertheless, regarding certain difficult reception scenarios like urban areas, it might be necessary to install one outdoor unit on the roof of a building to supply a plenty of user terminals with downstream signals on one hand and collecting the upstream signals on the other hand.

In the following embodiment, the principle depicted by FIG. 5 is extended to a single user as well as to an SMATV - like application.

First, FIG. 10 shows the compact solution of the single user environment fulfilling the operation requirements of the spectrum depicted in FIG. 3. Indoor - and outdoor unit are interconnected by one single transportation cable carrying the signal composite spectrum from e.g. 100 ... 2150 MHz as an IF layer. Additional command signals are supplied via the DiSEqC™ command set becoming a state-of-the-art standard in modern in-house satellite distribution networks. The indoor unit (set top box) principally consists of a downstream receiver ranging from e.g. 950 - 2150 MHz, a modulator for the upstreams ranging from e.g. 100 - 650 MHz as well as a DiSEqC™ control device for governing the outdoor unit.

The outdoor unit consists of a mixing and downconversion stage for each polarization, H and V, as basically designed in FIG. 5 with a switch for selecting the downstream high - and low band by two DROs (Dielectric Resonator Oscillator) DRO I and II. This is known from the satellite distribution scenario ("Universal_LNB") and embodies the fact that the user terminal IF frequency range is limited to 1.2 GHz versus the whole reception IF range is 2.05 Ghz.

In this solution example two frequency doublers are added for quadrification of the DRO frequency. The two bands are thus distinguished by applying a different oscillator frequency e.g. of $f_1$ + 4 x 0.2125 GHz = $f_1$ + 0.85 GHz to the mixing stages. This is similar to the satellite reception applying 9.75 GHz + 0.85 GHz =. 10.6 GHz. The upstream processing is performed as shown in FIG. 5 by exploiting the beacon signal. An emergency shutoff is provided as well as a possible power control by the indoor unit, signalled by the base station, to adopt the radiated power to the geographical location (distance). This is also kown from GSM mobile telephone operation. A control device receiving the DiSEqC™ commands is also part of this stage. Suitable filtering is provided for signal selection.

Couplers and power splitters are provided for signal addition / separation for transportation over single cable.

This cable shall be a conventional high-quality satellite IF distribution cable with a length of - depending on cable loss - up to approximately 50 meters.

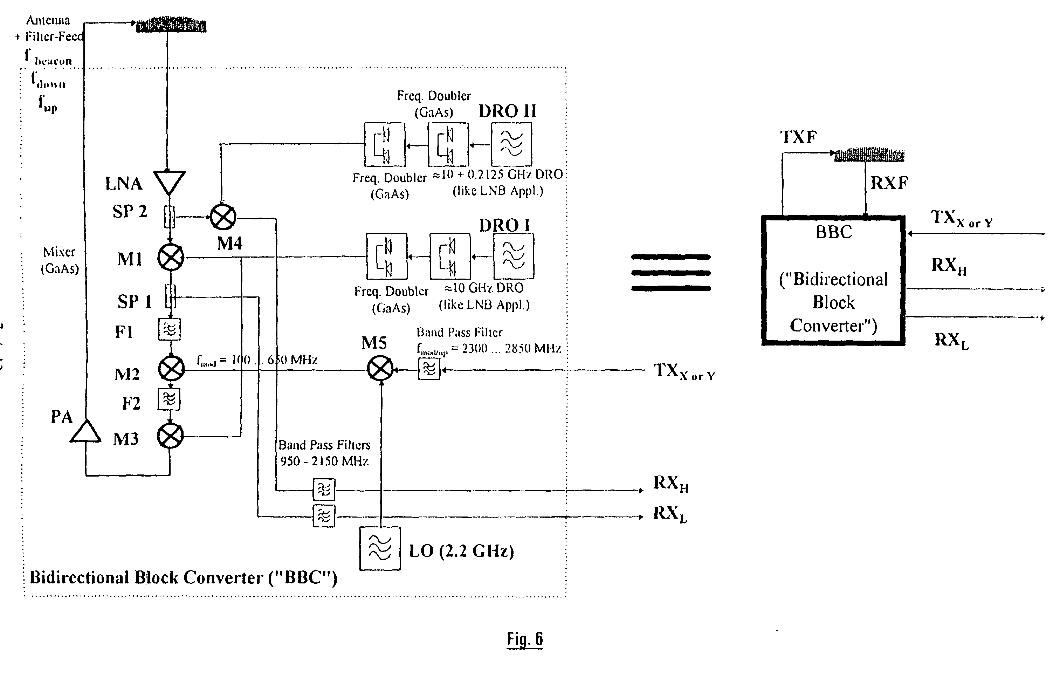

The multi user terminal application is also a subject of this embodiment: FIG. 6 firstly shows how the system depicted by FIG. 5 can be concentrated and somewhat modified to one block being able to form a sub-element for an outdoor unit in the environment of a house distribution. This block unit shall also be called a Bidirectional Block Converter ("BBC") referring as an analogy to the state - of - the - art LNB (Low Noise Block Converter) being now defined for bidirectional operation. It comprises, in addition to the elements described in FIG. 5, a mixer M5 and an LO at e.g. 2.2 GHz or another suitable frequency to downconvert the upstream IF level carriers at e.g. 2300 ... 2850 MHz running over the house distribution down to the values of e.g. 100 ... 650 MHz demanded in FIG. 5. This is provided to keep the IF frequency range in the cable below 950 MHz free in order to enable terrestrial in house distribution as well. Thus, the BBC has five elementary ports: The two ports at the RF level for the-transmit feed TXF and the reception feed RXF as well as the two receive ports for reception in the high and the low band $RX_H$ and $RX_L$ at the IF level. Only one additional port for transmission $TX_{x\ or\ y}$ for each polarization is necessary.

Using this block, the so-called LMATV BBC (= LMDS MASTERED ANTENNA TELEVISION BIDIRECTIONAL BLOCK CONVERTER) can be constructed: FIG. 11 depicts an in-house distribution with this kind of block converter: Two BBCs, applied to the corresponding antenna feeds, are used to supply the in-house IF level with the eight possible combinations composed of bands and polarizations:

Table 1

| Transmit | | Receive | |
|---|---|---|---|
| XPOL | YPOL | XPOL | YPOL |
| TXband | | HighBand | |
| TXband | | | LowBand |
| | TXband | LowBand | |
| | TXband | | HighBand |
| TXband | | LowBand | |
| TXband | | | HighBand |
| | TXband | HighBand | |
| | TXband | | LowBand |

Because the transmit band is not composed of two particular ranges (TXband only), eight combinations are sufficient and can be carried by six conventional SAT root cables as they are commonly used for two-position - SAT in-house distributions. Four cables are then used for the downstream signals as it is the case in the SAT application: Reception of high and low band as well as x and y polarization. Two additional cables serve for transmission: X and Y polarization of the upstreams. (In the case of a former two SAT in-house distribution with eight cables, two cables can be rejected). Additionally, the SAT roof antenna must be replaced by the LMATV aerial described above.

Since the outdoor unit has now to process a plenty of user terminal return carriers, power control and emergency shutoff have now to be performed by cutting off the individual modulation signal of each user terminal separately by base station command.

A Bidirectional Multiswitch BMS replaces the old unidirectional in-house distribution multiswitches as it is drawn here for two user outlets. This switch comprises connections for the six LMDS and one terrestrial root cables being looped-through as well as for the user outlets leading to the wall plugs. The user outlet cable carries the composite signal with terrestrial or cable TV signals at e.g. 0.05 ... 900 MHz, SAT IF signals at e.g. 950 ... 2150 MHz and upstreams at eg. 2300 ... 2850 MHz. Inside the switch, these particular signals are coupled out of / into the root cables by suitable couplers. Suitable filters serve for the signal separation being necessary to avoid crosstalk. The DiSEqC™ control is performed in this switch as well, now simulating an LMATV BBC to the indoor unit. In case a command is sent, the BMS configures the corresponding outlet by setting the switches to the demanded positions. Thus, a simple solution with low costs is possible for LMDS replacing the usual SAT distribution.

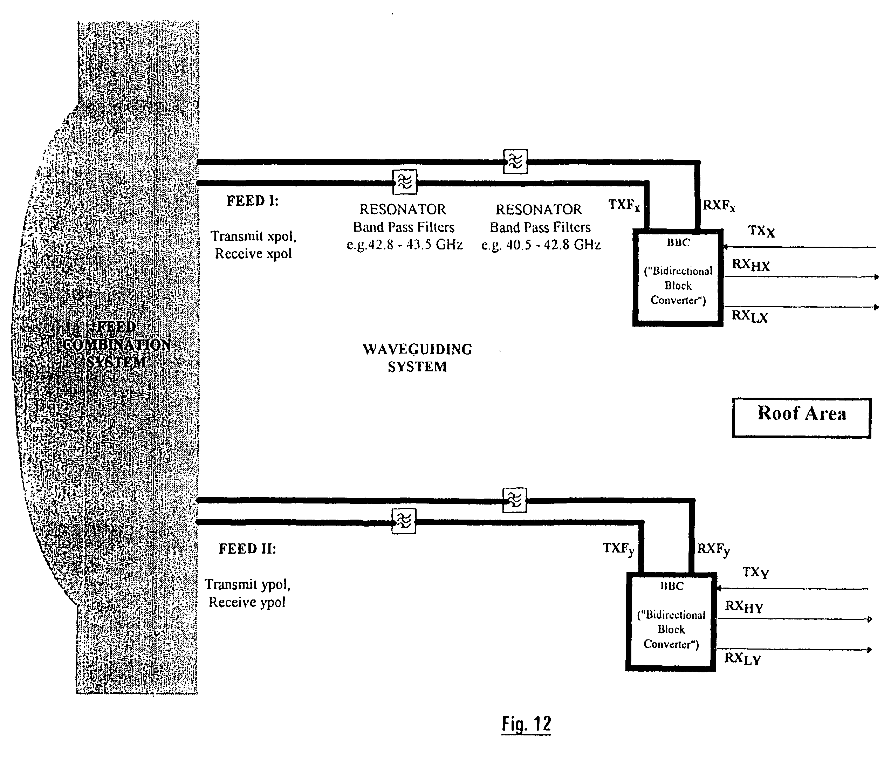

FIG. 12 shows the RF part of the aerial itself in a schematic manner.

The two BBCs supply and achieve their signals via their transmit ports $TXF_{x/y}$, as well as via their receive port connections $RXF_{x/y}$ by suitable 40 GHz waveguides. The IF ports $TX_{X/Y}$ and $RX_{H/L/X/Y}$ shall be realized with suitable coaxial cable connections. Transmit and receive paths in the feed combination system must be sufficiently decoupled to avoid end-around oscillations within the BBC - aerial system.

**Claims**

1. A user-site reception system for receiving TV and/ or audio and/or data signals transmitted from a base station, said system comprising:

   means for receiving downstream signals transmitted from a base station;
   means for generating upstream signals to be transmitted to said base station using a high-precision signal which can be transmitted from said base station as a reference, **characterized by** said means for generating upstream signals further comprising:
   means (M1) for downconverting said beacon signal using a local oscillator frequency signal;
   means (M2) for upstream modulation of said upstream signal onto said downconverted signal;

means (M3) for upconverting said upstream modulated downconverted signal using said local oscillator frequency signal, which has been used for downconverting.

2. A reception system according to claim 1, wherein said system is a reception-interaction system for a Local Multipoint Distribution system LMDS, said reception system further comprising:

means for command reception from a base station;

means for user interaction with said base station.

3. A reception system according to one of claims 1 or 2, said system comprising:

means for exploiting the high-precision beacon signal, said mixer comprising:

frequency processing means for upconverting the upstreams, given by modulator IF outputs, without any influence of parasitic phase noise and drift generated by receiver located conversion local oscillators;

means for downconversion of downstreams;
means for suitable filtering of frequency bands.

4. A reception system according to one of claims 1 to 3, further comprising:

means for processing of polarizations and frequency bands for up- and downstreams;
means for connecting to an IF frequency level to be connected to an in-house distribution infrastructure;
means for connecting to an RF frequency level to be connected to a radiator/receptor;
means for power amplification.

5. A single user outdoor unit, comprising:

a user-site reception system according to one of claims 1 to 4;
switching means for switching between frequency bands and polarizations for downstreams and between polarizations for upstreams;
means for connecting to a IF frequency level to be connected to an indoor unit.

6. A unit according to claim 5, further comprising means for remote control for functions including at least power control and emergency shutoff.

7. A system comprising an indoor unit and an outdoor unit according to claim 5 or 6 connected to each other, said indoor unit comprising:

receiving means for the reception of downstream signals;
demodulation means for demodulating the downstream signals;
modulation means for generating an upstream carrier based on a high-position beacon signal transmitted from a base station as a reference signal for the generation of said upstream carrier;
control means for generating switching commands.

8. A system according to claim 7, wherein said indoor unit further comprises one of the following:

means for exploiting base station commands to allocate upstream carriers and/or power;
means to control or shut off the upstream carrier power.

9. A system according to claim 7, further comprising:

an in-house distribution component, comprising:

switching means for switching the connection between individual user indoor units and the outdoor unit.

10. A system according to claim 9, wherein said switching means comprises means for bidirectional switching between the user indoor units and the outdoor unit.

11. A system according to claim 9, wherein said in-house distribution component further comprises:

means for controlling the switching in response to signals received from said indoor unit;
means for connecting to an IF frequenecy level to be connected to said indoor unit.

12. A Local Multipoint Distribution system LMDS comprising a user site reception system according to one of claims 1 to 4, and further comprising:

a base station for broadcasting or re-broadcasting of TV and/or audio and/or data signals, said station comprising:

means for transmitting downstream signals from said base station to at least one user terminal;
means for receiving upstream signals transmitted from said at least one user terminal;
means for transmitting a high-precision beacon signal as reference signal for the generation of said upstream signals.

13. A system according to claim 12, wherein said base station of said system further comprises one or a combination of the following:

means for baseband processing, modulation, and power combination of downstream carriers and/or
means for block conversion and power amplification of downstream carriers as well as demodulation of arbitrary numbers of upstream carriers;
means for station management;
means for controlling interactively communication frequencies and power;
means for communication with adjacent cells and a remote service provider; means for communication with other networks like satellite and/or cable.

14. A system according to claim 13, said base station comprising:

an upstream reception system with a stack of single demodulators comprising:

means for low noise amplification;
means for downconverting from RF to a first IF level;
means for power splitting;
a downconversion mixer bank for individual upstream carrier downconversion;
means for generating individual local oscillator frequencies;
means for filtering;
a demodulator bank;
means for baseband processing to exploit the incoming demodulated upstream data.

15. A system according to claim 14, further comprising means for arbitrarily configuring the demodulation mode.

16. A system according to claim 12, further comprising:

an upstream reception system with a multicarrier demodulator system comprising:

means for low noise amplification;
means for downconversion from RF to a first IF level;
means for quadrature downconversion;
means for sampling and for A/D-conversion for subsequent signal processing;
means for analytical multicarrier demodulation signal processing;
means for baseband processing.

17. A system according to claim 12, said base station comprising:

an upstream reception system with a FFT demodulation system comprising:

means for low noise amplification;
means for downconversion from RF to a first IF level;
means for quadrature downconversion;
means for sampling and for A/D-conversion for subsequent signal processing;
means for analytical FFT signal processing;
means for baseband processing.

**Patentansprüche**

1. Anwenderort-Empfangssystem zum Empfangen von Fernseh- und/oder Audio- und/oder Datensignalen, die von einer Basisstation übertragen werden, wobei das System umfasst:

eine Einrichtung zum Empfangen von Empfangssignalen, die von einer Basisstation übertragen werden;
eine Einrichtung zum Erzeugen von Rücksignalen, die an die Basisstation zu übertragen sind, indem ein hochgenaues Signal verwendet wird, das von der Basisstation als eine Referenz übertragen werden kann, **dadurch gekennzeichnet, dass** die Einrichtung zum Erzeugen von Rücksignalen ferner umfasst:

eine Einrichtung (M1) zum Abwärtskonvertieren des Bakensignals unter Verwendung eines Hilfsoszillatorfrequenzsignals;
eine Einrichtung (M2) zum Rückmodulieren des Rücksignals auf das abwärts konvertierte Signal; und
eine Einrichtung (M3) zum Aufwärtskonvertieren des rückmodulierten abwärts konvertierten Signals unter Verwendung des Hilfsoszillatorfrequenzsignals, das für die Abwärtskonvertierung verwendet worden ist.

2. Empfangssystem nach Anspruch 1, wobei das System ein Empfangs-Wechselwirkungssystem für ein Lokal/Mehrpunkt-Verteilungssystem (LMDS) ist, wobei das Empfangssystem ferner umfasst:

eine Einrichtung für den Befehlsempfang von einer Basisstation;

eine Einrichtung für die Anwenderwechselwirkung mit der Basisstation.

3. Empfangssystem nach einem der Ansprüche 1 oder 2, das umfasst:

   eine Einrichtung zum Auswerten des hochgenauen Bakensignals, wobei der Mischer umfasst:

   eine Frequenzverarbeitungseinrichtung zum Aufwärtskonvertieren der Rücksignale, die durch Modulator-ZF-Ausgänge gegeben sind, ohne jeglichen Einfluss eines parasitären Phasenrauschens und einer Drift, die durch die Hilfsoszillatoren zur Umsetzung am Empfängerort erzeugt werden;

   eine Einrichtung zur Abwärtskonvertierung von Empfangssignalen;

   eine Einrichtung zum geeigneten Filtern von Frequenzbändern.

4. Empfangssystem nach einem der Ansprüche 1 bis 3, das ferner umfasst:

   eine Einrichtung zum Verarbeiten von Polarisationen und Frequenzbändern für Rücksignale und Empfangssignale;

   eine Einrichtung zum Verbinden mit einem ZF-Frequenzpegel, die mit einer hausinternen Verteilungsinfrastruktur zu verbinden ist;

   eine Einrichtung zum Verbinden mit einem HF-Frequenzpegel, die mit einem Strahler/Empfänger zu verbinden ist;

   eine Einrichtung zur Leistungsverstärkung.

5. Einzelanwender-Einheit im Außenbereich, die umfasst:

   ein Anwenderort-Empfangssystem nach einem der Ansprüche 1 bis 4;

   eine Schalteinrichtung zum Umschalten zwischen Frequenzbändern und Polarisationen für Empfangssignale und zwischen Polarisationen für Rücksignale;

   eine Einrichtung zum Verbinden mit einem ZF-Frequenzpegel, die mit einer Einheit im Innenbereich zu verbinden ist.

6. Einheit nach Anspruch 5, die ferner eine Fernsteuereinrichtung für Funktionen, die wenigstens die Leistungssteuerung und eine Notabschaltung umfassen, enthält.

7. System, das eine Einheit für den Innenbereich und eine Einheit für den Außenbereich nach Anspruch 5 oder 6, die miteinander verbunden sind, umfasst, wobei die Einheit für den Innenbereich umfasst:

   eine Empfangseinrichtung zum Empfangen von Empfangssignalen;

   eine Demodulationseinrichtung zum Demodulieren der Empfangssignale;

   eine Modulationseinrichtung zum Erzeugen eines Rücksignalträgers auf der Grundlage eines hochgenauen Bakensignals, das von einer Basisstation als ein Referenzsignal für die Erzeugung des Rücksignalträgers übertragen wird;

   eine Steuereinrichtung zum Erzeugen von Schaltbefehlen.

8. System nach Anspruch 7, bei dem die Einheit für den Innenbereich ferner eine der folgenden Einrichtungen umfasst:

   eine Einrichtung zum Auswerten von Basisstation-Befehlen, um Rücksignalträger und/oder Leistung zuzuweisen; und

   eine Einrichtung zum Steuern oder Abschalten der Rücksignalträger-Leistung.

9. System nach Anspruch 7, das ferner umfasst:

   eine hausinterne Verteilungskomponente, die versehen ist mit:

   einer Schalteinrichtung zum Umschalten der Verbindung zwischen einzelnen Anwender-Einheiten im Innenbereich und der Einheit für den Außenbereich.

10. System nach Anspruch 9, bei dem die Schalteinrichtung eine Einrichtung zum bidirektionalen Umschalten zwischen den Anwender-Einheiten für den Innenbereich und der Einheit für den Außenbereich umfasst.

11. System nach Anspruch 9, bei dem die hausinterne Verteilungskomponente ferner umfasst:

   eine Einrichtung zum Steuern des Umschaltens in Reaktion auf Signale, die von der Einheit für den Innenbereich empfangen werden; und

   eine Einrichtung zum Verbinden mit einem ZF-Frequenzpegel, die mit der Einheit für den Innenbereich zu verbinden ist.

12. Lokal/Mehrpunkt-Verteilungssystem (LMDS), das ein Anwenderort-Empfangssystem nach einem der Ansprüche 1 bis 4 umfasst und ferner umfasst:

   eine Basisstation zum Rundsenden oder erneuten Rundsenden von Fernseh- und/oder Audio- und/oder Datensignalen, wobei die Station umfasst:

> eine Einrichtung zum Übertragen von Empfangssignalen von der Basisstation an wenigstens ein Anwenderendgerät;
> eine Einrichtung zum Empfangen von Rücksignalen, die von dem wenigstens einen Anwenderendgerät übertragen werden;
> eine Einrichtung zum Übertragen eines hochgenauen Bakensignals als ein Referenzsignal für die Erzeugung der Rücksignale.

13. System nach Anspruch 12, bei dem die Basisstation des Systems ferner eine der folgenden Einrichtungen oder eine Kombination hiervon umfasst:

> eine Einrichtung für die Grundbandverarbeitung, Modulation und Leistungskombination von Empfangssignalträgern und/oder
> eine Einrichtung für die Blockumsetzung und die Leistungsverstärkung von Empfangssignalträgern sowie zur Demodulation von Rücksignalträgern in beliebiger Anzahl;
> eine Einrichtung für das Stationsmanagement;
> eine Einrichtung zum interaktiven Steuern der Kommunikationsfrequenzen und der Leistung; und
> eine Einrichtung für die Kommunikation mit benachbarten Zellen und mit einem entfernten Dienst-Provider; und
> eine Einrichtung für die Kommunikation mit anderen Netzen wie etwa Satellit und/oder Kabel.

14. System nach Anspruch 13, bei dem die Basisstation umfasst:

> ein Rücksignal-Empfangssystem mit einem Stapel einzelner Demodulatoren, das versehen ist mit:

>> Mitteln für eine Verstärkung mit niedrigem Rauschen;
>> einer Einrichtung zum Abwärtskonvertieren von einem HF- zu einem ersten ZF-Pegel;
>> einer Einrichtung zur Leistungsaufteilung;
>> einer Abwärtskonvertierungs-Mischerbank für eine individuelle Rücksignalträger-Abwärtskonvertierung;
>> einer Einrichtung zum Erzeugen einzelner Hilfsoszillator-Frequenzen;
>> einer Einrichtung zum Filtern;
>> einer Demodulatorbank; und
>> einer Einrichtung zur Grundbandverarbeitung, um die ankommenden demodulierten Rücksignaldaten auszuwerten.

15. System nach Anspruch 14, das ferner eine Einrichtung zum beliebigen Konfigurieren der Demodulationsbetriebsart umfasst.

16. System nach Anspruch 12, das ferner umfasst:

> ein Rücksignal-Empfangssystem mit einem Mehrfachträger-Demodulatorsystem, mit:

>> einer Einrichtung für eine Verstärkung mit niedrigem Rauschen;
>> einer Einrichtung zur Abwärtskonvertierung von einem HF- zu einem ersten ZF-Pegel;
>> einer Einrichtung zur Quadratur-Abwärtskonvertierung;
>> einer Einrichtung zum Abtasten und zur A/D-Umsetzung für eine anschließende Signalverarbeitung;
>> einer Einrichtung zur analytischen Mehrfachträger-Demodulationssignal-Verarbeitung; und
>> einer Einrichtung zur Grundbandverarbeitung.

17. System nach Anspruch 12, bei dem die Basisstation umfasst:

> ein Rücksignal-Empfangssystem mit einem FFT-Demodulationssystem, mit:

>> einer Einrichtung für eine Verstärkung mit niedrigem Rauschen;
>> einer Einrichtung zur Abwärtskonvertierung von einem HF- zu einem ersten ZF-Pegel;
>> einer Einrichtung zur Quadratur-Abwärtskonvertierung;
>> einer Einrichtung zum Abtasten und zur A/D-Umsetzung für eine spätere Signalverarbeitung;
>> einer Einrichtung zur analytischen FFT-Signalverarbeitung; und
>> einer Einrichtung zur Grundbandverarbeitung.

## Revendications

1. Système de réception sur site utilisateur pour recevoir des signaux de télévision et/ou audio et/ou de données transmis à partir d'une station de base, ledit système comprenant :

> des moyens de réception de signaux descendants transmis à partir d'une station de base ;

des moyens de génération de signaux ascendants devant être transmis à ladite station de base en utilisant un signal de haute précision qui peut être transmis à partir de ladite station de base en tant que référence, **caractérisé en ce que** lesdits moyens de génération de signaux ascendants comprennent en outre :

des moyens (M1) pour convertir à la baisse ledit signal de radiobalise en utilisant un signal de fréquence de l'oscillateur local ;
des moyens (M2) pour réaliser une modulation en amont dudit signal ascendant sur ledit signal converti à la baisse ;
des moyens (M3) pour convertir à la hausse ledit signal converti à la baisse modulé en amont en utilisant ledit signal de fréquence de l'oscillateur local qui a été utilisé pour la conversion à la baisse.

2. Système de réception selon la revendication 1, dans lequel ledit système est un système de réception-interaction pour un système de télécommunication multipoint local LMDS, ledit système de réception comprenant en outre :

des moyens pour commander une réception à partir d'une station de base ;
des moyens pour une interaction utilisateur avec ladite station de base.

3. Système de réception selon la revendication 1 ou 2, ledit système comprenant :

des moyens d'exploitation du signal de radiobalise de haute précision, ledit mélangeur comprenant :

des moyens de traitement de fréquence pour convertir à la hausse les ascendants, fournis par des sorties de modulateur IF, sans aucune influence de bruits parasites et de dérivations générés par des oscillateurs locaux de conversion situés au récepteur ;
des moyens de conversion à la baisse de signaux descendants ;
des moyens de filtrage appropriés de bandes de fréquence.

4. Système de réception selon l'une quelconque des revendications 1 à 3, comprenant en outre :

des moyens de traitement de polarisation et de bande de fréquence pour des signaux ascendants et descendants ;
des moyens de connexion à un niveau de fréquence IF devant être connectés à une infrastructure de distribution interne ;
des moyens de connexion à un niveau de fréquence RF devant être connectés à un élément rayonnant/récepteur ;
des moyens d'amplification de puissance.

5. Unité extérieure à utilisateur unique, comprenant :

un système de réception sur site utilisateur selon l'une quelconque des revendications 1 à 4 ;
des moyens de commutation pour commuter entre des bandes de fréquence et des polarisations pour des signaux descendants et entre des polarisations pour des signaux ascendants ;
des moyens de connexion à un niveau de fréquence IF devant être connectés à une unité intérieure.

6. Unité selon la revendication 5, comprenant en outre des moyens pour une commande à distance sous des fonctions comprenant au moins une commande de puissance et une coupure d'urgence.

7. Système comprenant une unité intérieure et une unité extérieure selon la revendication 5 ou 6 connectées l'une à l'autre, ladite unité intérieure comprenant :

des moyens de réception pour la réception des signaux descendants ;
des moyens de démodulation pour démoduler les signaux descendants ;
des moyens de modulation pour générer une porteuse ascendante sur la base d'un signal de radiobalise de haute précision transmis à partir d'une station de base en tant que signal de référence pour la génération de ladite porteuse ascendante ;
des moyens de commande pour générer des commandes de commutation.

8. Système selon la revendication 7, dans lequel ladite unité intérieure comprend en outre un élément parmi les suivants :

des moyens d'exploitation de commandes de station de base pour attribuer des porteuses ascendantes et/ou de la puissance ;
des moyens de commande ou d'arrêt de la puissance de la porteuse ascendante.

9. Système selon la revendication 7, comprenant en outre :

un composant de distribution interne, comprenant :

des moyens de commutation pour faire commuter la connexion entre des unités intérieures pour des utilisateurs individuels et l'unité extérieure.

10. Système selon la revendication 9, dans lequel :

lesdits moyens de commutation comprennent des moyens pour une commutation bidirectionnelle entre les unités utilisateur intérieures et l'unité extérieure.

11. Système selon la revendication 9, dans lequel ledit composant de distribution interne comprend en outre :

des moyens de commande de la commutation en réponse aux signaux reçus à partir de ladite unité intérieure ;
des moyens de connexion à un niveau de fréquence IF devant être connectés à ladite unité intérieure.

12. Système de télécommunication multipoint local LMDS comprenant un système de réception sur site utilisateur selon l'une quelconque des revendications 1 à 4 et comprenant en outre :

une station de base pour diffuser ou rediffuser des signaux de télévision et/ou audio et/ou de données, ladite station comprenant :

des moyens pour transmettre des signaux descendants de ladite station de base à au moins un terminal utilisateur ;
des moyens pour recevoir des signaux ascendants transmis à partir dudit au moins un terminal utilisateur ;
des moyens pour transmettre un signal de radiobalise de haute précision en tant que signal de référence pour la génération desdits signaux ascendants.

13. Système selon la revendication 12, dans lequel ladite station de base dudit système comprend en outre un élément ou une combinaison des éléments suivants :

des moyens de traitement en bande de base, de modulation et de combinaison de puissance des porteuses descendantes et/ou
des moyens de conversion de blocs et d'amplification de puissance de porteuses descendantes ainsi que de démodulation de nombres arbitraires de porteuses ascendantes ;
des moyens de gestion de station ;
des moyens pour commander de manière interactive des fréquences et une puissance de communication ;
des moyens de communication avec des cellules adjacentes et un fournisseur de services à distance ; des moyens de communication avec d'autres réseaux comme des réseaux par satellites et/ou câbles.

14. Système selon la revendication 13, ladite station de base comprenant :

un système de réception ascendante avec une pile de démodulateurs uniques comprenant :

des moyens d'amplification de bruit faible ;
des moyens pour convertir à la baisse, d'un niveau RF à un premier niveau IF ;
des moyens de séparation de puissance ;
une banque de mélangeur de conversion à la baisse pour une conversion à la baisse de porteuse ascendante ;
des moyens de génération de fréquences d'oscillateur local individuelles ;
des moyens de filtrage ;
une banque de démodulation ;
des moyens de traitement en bande de base pour exploiter les données ascendantes démodulées entrantes ;

15. Système selon la revendication 14, comprenant en outre des moyens pour configurer de manière arbitraire le mode de démodulation.

16. Système selon la revendication 12, comprenant en outre :

un système de réception ascendant avec un système de démodulation multiporteuse comprenant :

des moyens d'amplification de bruit faible ;
des moyens de conversion à la baisse, d'un niveau RF à un premier niveau IF ;
des moyens d'échantillonnage et de conversion A/N en vue d'un traitement de signal suivant ;
des moyens de traitement analytique de signal de démodulation multiporteuse ;
des moyens de traitement en bande de base.

17. Système selon la revendication 12, ladite station de base comprenant :

un système de réception avec un système de démodulation FFT comprenant :

des moyens d'amplification de bruit faible ;
des moyens de conversion à la baisse d'un niveau RF à un premier niveau IF ;
des moyens de conversion à la baisse en quadrature ;
des moyens d'échantillonnage et de conversion A/N en vue d'un traitement de signal suivant ;
des moyens de traitement analytique de signal FFT ;
des moyens de traitement en bande de base.

**Satellite**
(Broadcast channels)

(May also be a different global network)

Broadcast

LMDS cell

Base station

40 GHz
Up - und
Downstreams

User
Inter=
aktion

Set top boxes
(User terminals)

To other cells
(Broadcast)

Fig. 1

Satellite
(Broadcast
channels)

(May also be a different global network)

Communication of base stations with
service provider

Communication between the base stations

**Fig. 2**

EP 1 070 398 B1

**Fig. 3**

EP 1 070 398 B1

Backhaul Antenna
with wideband LNB

e.g. **30 SAT**
**Transponders**

Wideband RF Filter

Mixer
(Block Conversion)

**HPA**

Antenna (Horn)

Wideband RF Filter
(Image Rejection)

Other Carriers may be
added by **Power**
**Combination** as in
FIG.3b!

1ˢᵗ LO
Control

Station
Computer

Fig. 4a

EP 1 070 398 B1

Antenna (Horn)

HPA

Wideband RF Filter
(Image Rejection)

Mixer
(Block Conversion)

1st LO
Control

Station
Computer

Non Real Time Tasks
(NIT Setting, Additional
Services)

Power Combiner

Mod IF Bandpass Filter

Mixer (Upconverter)

2nd LO & Filter Management

Downstream
Modulator

Downstream
Modulator

Downstream
Modulator

1

2

N

Baseband Processing
(Programme & Data
Combination)

Channels from
Remote

**Fig. 4b**

19

Antenna
+ Filter-Feed

$f_{beacon}$

$f_{down}$

**LNA**

$f_{LO}+\Delta f$
($\Delta f$ = Phase Noise + Drift!)

**DRO**

Mixer (GaAs)

**M1**

**SP**

Freq. Doubler
(GaAs)

$\approx$10 GHz DRO
(like LNB Appl.)

$f_{down} - f_{LO} - \Delta f$

**F1**

$f_{beacon} - f_{LO} - \Delta f$

**M2**

$f_{mod}$

Upstream
Modulator

**F2**

$f_{beacon} - f_{LO} - \Delta f + f_{mod}$

**PA**

**M3**

$f_{beacon} - f_{LO} - \Delta f + f_{mod} + f_{LO} + \Delta f = f_{Upstream}$

**Fig. 5**

Fig. 6

Fig. 7

**Fig. 8**

Fig. 9

EP 1 070 398 B1

EP 1 070 398 B1

Fig. 10

Indoor Unit

Upstream Modulator

Receiver

DiSEqC™ Control Device (Transmitter)

100 - 650 MHz

Band Pass Filter 950 - 2150 MHz

Coupler

Transportation Cable (In - House)

100 - 2150 MHz

Outdoor Unit

Antenna + Filter-Feed
$f_{beacon}$
$f_{down}$
$f_{up}$

LNA

SP 2

M1

Mixer (GaAs)

SP 1

F1

M2

F2

M3

PA

M4

(Other Polarization, same circuit)

DRO II

Freq. Doubler (GaAs)

≈10 + 0.2125 GHz DRO (like LNB Appl.)

Freq. Doubler (GaAs)

DRO I

≈10 GHz DRO (like LNB Appl.)

Freq. Doubler (GaAs)

Coupler

SP 3

Band Pass Filter 100 - 700 MHz

Band Pass Filter 950 - 2150 MHz

Band Pass Filter 22 KHz

Switch

Polswitch

(Other Polarization)

DiSEqC™ Control Device (Receiver)

25

Level of 6 roof cables for in-house distribution (state-of-the-art)

Bidirectional Multiswitch BMS (Two Systems)

To Antenna Feeds

Transmit xpol, Receive xpol

TXF$_x$  RXF$_x$

TX$_x$
RX$_{HX}$
RX$_{LX}$

BBC ("Bidirectional Block Converter")

TX Pol Switch

Band Pass Filter 2300...2850 MHz

DiSEqC™ Control Device (Receiver)

TX Pol Switch

Band Pass Filter 2300...2850 MHz

DiSEqC™ Control Device (Receiver)

Band Pass Filter 950 - 2150 MHz

Band Pass Filter 0.05 - 900MHz

Band Pass Filter 22 KHz

Band Pass Filter 950 - 2150 MHz

Band Pass Filter 22 KHz

Coupler

Roof Area

Terrestrial Antenna

or Telecom's Cable

Terrestrial

Transmit ypol, Receive ypol

TXF$_y$  RXF$_y$

TX$_y$
RX$_{HY}$
RX$_{LY}$

BBC ("Bidirectional Block Converter")

Transportation Cable (In - House) 0.05 - 2850 MHz

Indoor Unit

2300 - 2850 MHz

Upstream Modulator

Band Pass Filter 0.05 - 900MHz

Coupler

Terrestrial

Conventional TV/Radio Plug

Band Pass Filter 950 - 2150 MHz

Receiver

DiSEqC™ Control Device (Transmitter)

To Other Indoor Unit Plugs

**Fig. 11**

EP 1 070 398 B1

**FEED I:**

Transmit xpol,
Receive xpol

RESONATOR
Band Pass Filters
e.g. 42.8 - 43.5 GHz

RESONATOR
Band Pass Filters
e.g. 40.5 - 42.8 GHz

TXF$_x$

RXF$_x$

TX$_X$

BBC

("Bidirectional
Block
Converter")

RX$_{HX}$

RX$_{LX}$

WAVEGUIDING
SYSTEM

FEED
COMBINATION
SYSTEM

Roof Area

**FEED II:**

Transmit ypol,
Receive ypol

TXF$_y$

RXF$_y$

TX$_Y$

BBC

("Bidirectional
Block
Converter")

RX$_{HY}$

RX$_{LY}$

Fig. 12